Europäisches Patentamt

European Patent Office

Office européen des brevets

(19)

(11) Publication number: **0 083 819**
**A1**

(12) # EUROPEAN PATENT APPLICATION

(21) Application number: **82201662.2**

(22) Date of filing: **28.12.82**

(51) Int. Cl.³: **F 03 D 7/02**

(30) Priority: **08.01.82 BE 207014**

(43) Date of publication of application:
**20.07.83 Bulletin 83/29**

(84) Designated Contracting States:
**AT CH DE FR GB IT LI LU NL SE**

(71) Applicant: **Hayen, Jos**
**Stokstraat, 10**
**B-3813 Zepperen(BE)**

(71) Applicant: **Hayen, Paul**
**Eynestraat, 44**
**B-3813 Zepperen(BE)**

(72) Inventor: **Hayen, Jos**
**Stokstraat, 10**
**B-3813 Zepperen(BE)**

(72) Inventor: **Hayen, Paul**
**Eynestraat, 44**
**· B-3813 Zepperen(BE)**

(74) Representative: **Pieraerts, Jacques et al,**
**Bureau Gevers S.A. rue de Livourne 7, Bte. 1**
**B-1050 Bruxelles(BE)**

(54) **Device for retaining a directable windmill in the wind direction.**

(57) There is described a device for retaining a directable windmill in the wind direction, said windmill having a rotatable body, which is mainly comprised of a sensor formed by a housing (13) integral with said body (3) a part (14) which is rotatably mounted relative to said housing (13) and the position of which relative to said housing (13) varies depending on the wind direction due to a vane (15) mounted thereon, means to record the amplitude of the changes in position from the housing (13) relative to said rotatable part (14) and the direction thereof, and to couple electric pulses to a three-phase electric motor (7) which can act on the direction of said windmill body (3) relative to said pylon (6).

FIG. 1

"Device for retaining a directable windmill in the wind direction".

This invention relates to a device for retaining a directable windmill in the wind direction, said windmill having a body which is rotatably mounted on a pylon.

Windmills with a body which is rotatably mounted on a pylon or similar vertical structure, have to be constantly directed to the wind.

The invention has for object to provide a device which solves the above-defined problem in a very efficient way and brings moreover the advantage that the windmill always remains directed to the wind without actually following small unsignificant temporary changes in the wind direction.

For this purpose the device according to the invention is mainly comprised of a sensor formed by a housing integral with said body, a part which is rotatably mounted relative to said housing and the position of which relative to said housing varies depending on the wind direction due to a vane mounted thereon, means to record the amplitude of the changes in position from the housing relative to said rotatable part and the direction thereof, and to couple electric pulses to a three-phase electric motor which can act on the direction of said windmill body relative to said pylon.

Preferably said means for recording the amplitude of said changes and the direction thereof, are formed by a sensing plate fixedly connected to said rotatable part, which cooperates with two induction transducers which are fixed relative to said housing, while according to the relative position of said sensing plate relative to said induction transducers, current pulses are coupled to said three-phase motor, in such a way that the windmill body is rotated relative to said pylon depending on the rotation direction of said three-phase motor.

A feature of the invention lies in the coupling of said pulses to said three-phase motor being dependent on a timer.

Advantageously, said three-phase motor is fixedly connected with the housing thereof to said rotatable body, while a gear wheel fixedly mounted on the motor driving shaft meshes with a crown gear which is fixedly supported on said pylon.

Other details and features of the invention will stand out from the following description, given by way of non limitative example and with reference to the accompanying drawings, in which :

Figure 1 is a diagrammatic showing as a side view with part cross-section, of a windmill provided with a device according to the invention.

Figure 2 is a cross-section on a larger scale, of the sensor which is part of the device according to the invention, drawn in a position that corresponds to a particular wind direction.

Figure 3 shows on a large scale, a cross-section through the sensor which is part of the device according to the invention, as considered in another position for the wind direction.

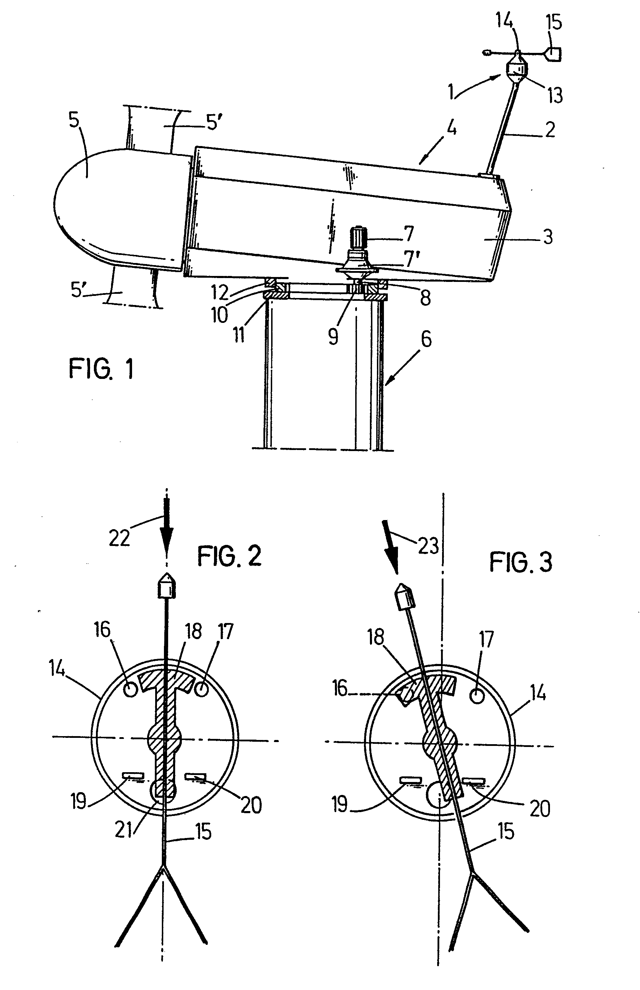

The device as shown in general in 1 and which will be described mostly with reference to figures 2 and 3, is rigidly connected with a rod 2 to the body 3 from the windmill 4 the rotor head 5 of which is fitted with vanes 5'. At the bottom thereof the housing 3 from said windmill 4 is connected to the gear-box 7' from a three-phase motor 7. On the drive shaft 8 from motor 7 is fixedly locked a gear wheel 9 which meshes with a crown gear 10 which is in turn integral with an element 11 which is part of a pylon 6.

At the bottom thereof, said body 3 is further provided with a bearing ring 12 with an inner diameter which is somewhat larger than or equal to the outer diameter of said crown gear 10.

The operation of the device will be quite clear after a detailed description of the sensor which comprises the main component from the device according to the invention.

The sensor which forms the device 1 proper, is comprised of a housing 13 integral with said rod 2, said housing 13 having mainly a cylinder-like shape and bearing therein a part 14 which is rotatable relative to said housing. Said part 14 is rotatable relative to housing 13, is provided with a wind vane 15. It is thus quite clear that the movements of said part 14 relative to housing 13 will result from the action of the wind or wind gusts on said vane 15.

Two induction transducers 16 and 17 are mounted inside as part of housing 13. Also inside of housing 13 but with a connection with rotatable part 14, is mounted an anchor-shaped contact plate 18. Said armature-shaped plate 18 may for example be made fast to a fixed shaft 19 which is in turn integral with said movable part 14. It is clear that any other form of connection between the anchor-shaped plate 18 and the rotatable part 14 might be considered.

Components which are fixedly connected to said housing 13, comprise stops 19 and 20, and a magnet 21.

When the wind direction does correspond to that direction as shown by arrow 22 in figure 2, it may be considered that the windmill is suitably directed to the wind direction. The armature-shaped plate 18 lies equally spaced from said induction transducers 16 and 17, and the three-phase motor 7 is completely unoperative.

When the wind direction does change as shown by arrow 23 in figure 3, the anchor-shaped plate 18 comes with the left leg thereof above the one induction transducer 16. As said induction transducers 16 and 17 as well as the anchor-shaped plate 18 are connected into a circuit through which current pulses may be coupled to said three-phase motor 7, the required pulses are first coupled to a microprocessor not shown, which will couple the suitable pulses to said three-phase motor 7. Those pulses being coupled do not reach directly said three-phase motor, but are rather first "stored" in or "interpreted" by a timer. Cutting-in of said timer has for object to avoid said motor 7 being operated for every short unsignificant change in the wind direction. Due to cutting-in of a timer, said three-phase motor 7 will only be operated as there occurs a change in the wind direction which can be considered as large enough.

As the three-phase motor is operated, that gear wheel 9 which meshes with said fixed crown gear 10, will rotate according to the enforced revolution direction. The operation of said three-phase motor 7 is determined and controlled by a microprocessor which determines and limits in time the motor operation. Should after a determined set time interval, said contact plate 18 still lie in the same position, it is then possible through the microprocessor and the timer, to operate again said three-phase motor 7 for a limited time interval. It might thus be reckoned that the windmill is now directed in the new wind direction, in such a way that the anchor-shaped contact plate will necessarily return to the center position thereof between both induction transducers 16 and 17. Due to the presence of a magnet 21 which is part of the housing 13 which is not rotatable relative to windmill body 13, said contact plate 18 is retained together with wind vane 15 in the suitable center position and it is also prevented thereby that said component should move too fast from such position under the action of small wind gusts.

Conversely, when the right leg from the anchor-shaped contact plate 18 comes to lie above the induction transducer 17, said three-phase motor 7 will again be powered but it will rotate in the opposite direction. Should the new wind direction which has brought the contact plate 18 with the right leg thereof above the induction transducer 17, hold, then the unit will return to the balance condition as shown in figure 2. During wind calm , the anchor-shaped contact plate 18 remains in the center position due to said magnet 21. The stops 19 and 20 have to prevent vane 15 and contact plate 18 rotating too far and leaving the power field from said magnet 21.

It must be understood that the invention is in no way limited to the above embodiments and that many changes may be brought thereto without departing from the scope of the invention as defined by the appended claims.

CLAIMS.

1. Device for retaining a directable windmill in the wind direction, said windmill having a body which is rotatably mounted on a pylon, which is mainly comprised of a sensor formed by a housing (13) integral with said body (3), a part (14) which is rotatably mounted relative to said housing (13) and the position of which relative to said housing (13) varies depending on the wind direction due to a vane (15) mounted thereon, means to record the amplitude of the changes in position from the housing (13) relative to said rotatable part (14) and the direction thereof, and to couple electric pulses to a three-phase electric motor (7) which can act on the direction of said windmill body (3) relative to said pylon (6).

2. Device as defined in claim 1, in which said means for recording the amplitude of said changes and the direction thereof, are formed by a sensing plate (18) fixedly connected to said rotatable part (14), which cooperates with two induction transducers (16,17) which are fixed relative to said housing (13) while according to the relative position of said sensing plate (18) relative to said induction transducers (16,17), current pulses are coupled to said three-phase motor (7), in such a way that the windmill body (3) is rotated relative to said pylon depending on the rotation direction of said three-phase motor (7).

3. Device as defined in claim 1, in which the coupling of said pulses to said three-phase motor (7) is dependent on a timer.

4. Device as defined in claim 1, in which said three-phase motor (7) is fixedly connected with the housing (7') thereof to said rotatable body (3), while a gear wheel (8) fixedly mounted on the motor driving shaft meshes with a crown gear (10) which is fixedly supported on said pylon (6).

5. Device as defined in claim 1, in which said rotatable part (14) is limited in the movements thereof relative to said housing (13), by means of stops.

6. Device as defined in claim 2, in which said anchor-shaped contact plate (18) is retained in the center position thereof between both said induction transducers (16,17), by means of a magnet.

7. Device as defined in claim 3, in which said timer is controlled by a microprocessor.

FIG. 1

FIG. 2

FIG. 3

0083819

Application number

EP 82 20 1662

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 213 734 (LAGG)<br><br>*Column 3, lines 17-63*<br><br>--- | 1,2,3,<br>4,7 | F 03 D 7/02 |
| A | DE-C- 600 331 (SCHELLER)<br>*Page 2, lines 11-95*<br><br>----- | 2,5 | |

| | TECHNICAL FIELDS SEARCHED (Int. Cl. ³) |
|---|---|
| | F 03 D |

The present search report has been drawn up for all claims

| Place of search<br>THE HAGUE | Date of completion of the search<br>14-04-1983 | Examiner<br>DE WINTER P.E.F. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03.82